# EUROPÄISCHE PATENTSCHRIFT

(11) **EP 3 145 702 B1**
(45) Veröffentlichungstag und Bekanntmachung des Hinweises auf die Patenterteilung: **28.06.2023**
(21) Anmeldenummer: 15722144.1
(22) Anmeldetag: 05.05.2015
(51) Int. Cl.: B29C 70/54, B29C 31/08, B29B 11/16, B29C 51/26, B29C 65/62

(54) **VERBINDUNGSANLAGE ZUM VERBINDEN EINES HALBZEUGES MIT EINEM POSITIONIERUNGSKÖRPER UND VERFAHREN ZUM PRÄPARIEREN DES HALBZEUGES**
CONNECTING SYSTEM FOR CONNECTING A SEMIFINISHED PRODUCT TO A POSITIONING MEMBER, AND METHOD FOR PREPARING THE SEMIFINISHED PRODUCT
SYSTÈME DE LIAISON POUR RELIER UN PRODUIT SEMI-FINI À UN ÉLÉMENT DE POSITIONNEMENT ET PROCÉDÉ DE PRÉPARATION DU PRODUIT SEMI-FINI

(30) Priorität: 20.05.2014 DE 102014209523
(43) Veröffentlichungstag der Anmeldung: 29.03.2017
(73) Patentinhaber: Bayerische Motoren Werke Aktiengesellschaft, 80809 München (DE)
(72) Erfinder: HODDE, Jan, 80796 München (DE)
(86) Internationale Anmeldenummer: PCT/EP2015/059762
(87) Internationale Veröffentlichungsnummer: WO 2015/176948

(56) Entgegenhaltungen:
- EP-A1- 0 347 503
- EP-A1- 2 724 848
- DE-A1-102010 054 097
- DE-A1-102012 010 497
- DE-A1-102012 019 915
- US-A- 5 429 853
- US-A- 5 829 373
- US-A1- 2004 026 025

## Beschreibung

Die vorliegende Erfindung betrifft eine Verbindungsanlage zum Verbinden eines Faserhalbzeuges mit einem Positionierungskörper zum Positionieren des Faserhalbzeuges zumindest an wenigstens einem Positioniermittel einer Bearbeitungsanlage zum Bearbeiten des Faserhalbzeuges. Ferner betrifft die vorliegende Erfindung ein Verfahren zum Präparieren eines zumindest in einer Bearbeitungsanlage zum Bearbeiten eines Faserhalbzeuges anordenbaren Faserhalbzeuges mittels einer Verbindungsanlage zum Verbinden des Faserhalbzeuges mit einem Positionierungskörper.

EP 2 724 848 A1 zeigt einen bekannten Stand der Technik.

Grundlegend ist es bekannt, dass für die Handhabung von Halbzeugen, wie insbesondere imprägnierten Halbzeugen und insbesondere imprägnierten Faserhalbzeugen, beispielsweise Greifer eingesetzt werden, welche das Halbzeug an deren Randbereichen einklemmen und infolgedessen auch als Klemmgreifer bezeichnet werden können. Jedoch ist es als nachteilig anzusehen, dass mittels dieser Greifer die Position des Halbzeuges nicht präzise und stabil zumindest während des Transportes des Halbzeuges von beispielsweise einer ersten Bearbeitungsanlage zu einer zweiten Bearbeitungsanlage gehalten werden kann. Demzufolge ist der Anmelderin aus dem firmeninternen Stand der Technik bekannt, dass für den Transport dieser Halbzeuge und/oder für die Anordnung der Halbzeuge im Bereich einer Bearbeitungsanlage, wie beispielsweise einer Injektionsanlage bzw. Imprägnieranlage oder auch einer Konsolidierungsanlage, sogenannte Positioniermittel bzw. Aufnahmemittel verwendet werden, welche vorteilhaft in Form eines Stiftes bzw. Pins oder auch Stabes ausgestaltet sind. Diese Positioniermittel können sich zumindest abschnittsweise durch entsprechende Ausnehmungen, wie beispielsweise Bohrungen bzw. Durchgangsbohrungen, und folglich durch die Materialdicke des Halbzeuges hindurch erstrecken. Mittels derartiger Positioniermittel bzw. Aufnahmemittel ist es möglich, das Halbzeug während des Transportes mittels der Transportanlage sowie auch während der Bearbeitung mittels der Bearbeitungsanlage in einer vordefinierten Position zu halten. Hierzu ist es erforderlich, dass die Halbzeuge entsprechende Ausnehmungen bzw. Bohrungen aufweisen, welche folglich in entsprechenden Bereichen des Halbzeuges eingebracht werden müssen, bevor dieses beispielsweise in den einzelnen Bearbeitungsanlagen bearbeitet wird. Um insbesondere Kosten bei der Herstellung des Halbzeuges einzusparen, ist es vorteilhaft, die entsprechenden Ausnehmungen nicht innerhalb des Halbzeuges selbst einzubringen, insbesondere weil derartige mit den entsprechenden Ausnehmungen versehene Randbereiche nach der Bearbeitung des Halbzeuges wieder entfernt werden müssen, um ein fertiges Endbauteil zur Verfügung zu stellen. Hierdurch würde eine zu hohe Ausschussmenge anfallen, wodurch folglich die Herstellkosten des Halbzeuges erhöht werden würden.

So ist es denkbar Positionierungskörper zu verwenden, welche als zusätzliche Elemente, insbesondere in Randbereichen und vorteilhaft in Überlappungsbereichen des Halbzeuges angeordnet und an dem Halbzeug fixiert werden. Eine Fixierung der Positionierungskörper an dem Halbzeug und insbesondere den Überlappungsbereichen des Halbzeuges ist beispielsweise mittels einer Nähanlage und vorteilhaft einer 2D-Portalnähanlage möglich. Es ist jedoch auch denkbar, dass die Positionierungskörper unter Verwendung anderer lösbarer oder auch unlösbarer Verbindungsmittel, wie beispielsweise Schrauben, Nieten, Klebemittel usw. mit den Überlappungsbereichen des Halbzeuges verbunden werden. Auch die Verwendung der Verbindungsverfahren des Schweißens, Falzens oder Clinchens oder vergleichbarer Verfahren ist hierbei denkbar. Vorteilhaft wird durch ein Anbringen von Positionierungskörpern oder zumindest eines Positionierungskörpers an dem Halbzeug und insbesondere wenigstens einem Überlappungsbereich des Halbzeuges der Zuschnitt des Halbzeuges vorteilhaft verkleinert und Halbzeugmaterial eingespart. Insbesondere werden die Positionierungskörper vorteilhaft aus einem zum Halbzeug abweichenden und insbesondere kostengünstigeren Material gefertigt und weisen folglich ein Material geringerer Güte auf.

Imprägnierte Faserhalbzeuge finden insbesondere im Flugzeugbau, in der Raumfahrt sowie auch im Fahrzeugbau Anwendung und werden bekannterweise als Prepregs bezeichnet. Prepregs sind vornehmlich ebene flächige Fasergebilde, welche in einem kontinuierlichen Prozess mit einem Matrixsystem im gewünschten Harz-Faser-Verhältnis imprägniert sind. Im Wesentlichen gibt es zwei bekannte textile Gebilde, wie beispielsweise das unidirektionale Prepreg, bei welchem in der Schicht alle Fasern parallel ausgerichtet sind und zum anderen Gewebeprepregs mit einer Reihe unterschiedlicher Gewebearten. Die industrielle Herstellung von imprägnierten Faserverbundwerkstoffhalbzeugen erfolgt bekannterweise durch Handlaminieren im Nasspressverfahren, im Prepregpressverfahren oder im Harzinfusionsverfahren, wie beispielsweise dem Resin-Transfer-Molding-(RTM)-Verfahren. Bei allen zuvor genannten Verfahren wird ein Halbzeug aus beispielsweise Kunstfasern in ein Imprägnierwerkzeug und insbesondere eine Imprägniervorrichtung bzw. eine Injektionsanlage eingelegt und mit einem Imprägniermittel, wie beispielsweise einem Imprägnierharz getränkt bzw. besprüht, wobei das Imprägniermittel durch die Hohlräume zwischen den Fasern eindringt und diese ummantelt. Nach dem Imprägnierprozess wird das mit dem Imprägniermittel getränkte Halbzeug in ein entsprechendes Formwerkzeug zum Verpressen des Halbzeuges eingelegt, welches auch als Konsolidierungsanlage bezeichnet werden kann. Während dieses Pressvorganges wird insbesondere die Struktur des imprägnierten Faserhalbzeuges vernetzt und das Halbzeug geformt. Um einen Transport des zu bearbeitenden Halbzeuges und insbesondere des mit dem Imprägnierharz getränkten Halbzeuges zu der Konsolidierungsvorrichtung zu ermöglichen, ist es erforderlich das Halbzeug mittels einer Transportanlage aufzunehmen und aus dem Imprägnierwerkzeug zum Konsolidierungswerkzeug zu transportieren und diesem zu übergeben. Hierfür ist ein präzises Aufnehmen und Ablegen erforderlich.

Für die Verwendung entsprechende Positionierungskörper aufweisender zu bearbeitender Halbzeuge ist es erforderlich, dass diese Positionierungskörper in definierter Position an dem Halbzeug angeordnet werden, damit das Halbzeug mittels der entsprechenden Transportanlage transportiert sowie mittels der entsprechenden Bearbeitungsanlage bearbeitet werden kann.

Es ist daher die Aufgabe der vorliegenden Erfindung eine Verbindungsanlage zum Verbinden eines Faserhalbzeuges mit einem Positionierungskörper sowie ein Verfahren zum Präparieren eines zumindest in einer Bearbeitungsanlage zum Bearbeiten eines Faserhalbzeuges anordenbaren Faserhalbzeuges mittels einer Verbindungsanlage zur Verfügung zu stellen, mittels welchen in einfacher und kostengünstiger Art und Weise eine vordefinierte und präzise Anordnung der Positionierungskörper an dem Faserhalbzeug und insbesondere an Überlappungsbereichen des Faserhalbzeuges ermöglicht werden kann.

Die voranstehende Aufgabe wird gelöst durch eine Verbindungsanlage zum Verbinden eines Faserhalbzeuges mit einem Positionierungskörper zum Positionieren des Faserhalbzeuges zumindest an wenigstens einem Positioniermittel einer Bearbeitungsanlage zum Bearbeiten des Faserhalbzeuges mit den Merkmalen gemäß Anspruch 1. Ferner wird die voranstehende Aufgabe gelöst mittels eines Verfahrens zum Präparieren eines zumindest in einer Bearbeitungsanlage zum Bearbeiten eines Faserhalbzeuges anordenbaren Faserhalbzeuges mittels einer Verbindungsanlage zum Verbinden des Faserhalbzeuges mit einem Positionierungskörper mit den Merkmalen gemäß Anspruch 7. Weitere Merkmale und Details der Erfindung ergeben sich aus den Unteransprüchen, der Beschreibung und den Zeichnungen. Dabei gelten Merkmale und Details, die im Zusammenhang mit der Verbindungsanlage beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird bzw. werden kann. Außerdem kann das erfindungsgemäße Verfahren unter Verwendung der erfindungsgemäßen Verbindungsanlage durchgeführt werden.

Die erfindungsgemäße Verbindungsanlage zum Verbinden eines Faserhalbzeuges mit einem Positionierungskörper zum Positionieren des Faserhalbzeuges zumindest an wenigstens einem Positioniermittel einer Bearbeitungsanlage zum Bearbeiten des Faserhalbzeuges weist wenigstens eine Fügevorrichtung zum Zusammenfügen des Faserhalbzeuges mit dem Positionierungskörper und zumindest ein Platzierungsmittel zum Platzieren des Positionierungskörpers an der Verbindungsanlage auf. Das Platzierungsmittel ist ein Platzierungspin oder Platzierungsstift, welcher sich ausgehend von einem Haltemittel der Verbindungsanlage wenigstens zum Halten des Faserhalbzeuges weg erstreckt.

Die Verbindungsanlage ist vorteilhaft eine Fügeanlage, welche dazu dient, zumindest einen Positionierungskörper mit dem Faserhalbzeug und insbesondere wenigstens einem Überlappungsbereich des Faserhalbzeuges zu verbinden. Die Fügevorrichtung der Verbindungsanlage ist je nach Ausgestaltung der Verbindungsanlage beispielsweise ein Nähkopf oder auch ein Schweißkopf, ein Nietkopf, ein Clinchkopf usw., um mit oder ohne einem entsprechenden lösbaren bzw. unlösbaren Verbindungsmittel eine lösbare oder unlösbare Verbindung zwischen dem Positionierungskörper und dem Faserhalbzeug zu erzeugen.

Das Platzierungsmittel des Faserhalbzeuges dient vorteilhaft dazu den wenigstens einen Positionierungskörper und vorteilhaft eine Mehrzahl an Positionierungskörpern innerhalb bzw. an der Verbindungsanlage an einer vordefinierten Position anzuordnen, wobei diese Positionierung des Platzierungskörpers in der Verbindungsanlage der späteren Positionierung des Positionierungskörpers hinsichtlich der Positionierungsmittel bzw. der Aufnahmemittel der Bearbeitungsanlage bzw. der Transportanlage entspricht. Damit ist es denkbar, dass mit der Verwendung des Platzierungsmittels zum einen die Platzierung des Positionierungskörpers relativ zu der Fügevorrichtung der Verbindungsanlage selbst gewährleistet werden soll und/oder zum anderen auch relativ zu dem Faserhalbzeug, mit welchem der Positionierungskörper verbunden werden soll, so dass eine vorbestimmte und folglich exakte Positionierung des Positionierungskörpers an dem Faserhalbzeug gewährleistet werden kann. Eine exakte Positionierung des Positionierungskörpers an dem Faserhalbzeug und insbesondere an dem Überlappungsbereich des Faserhalbzeuges dient vorteilhaft dazu, dass das Faserhalbzeug und insbesondere der mit dem Faserhalbzeug verbundene Positionierungskörper mit den Positioniermitteln bzw. Aufnahmemitteln der Bearbeitungsanlage bzw. der Transportanlage aufgenommen bzw. gegriffen werden kann.

Die Transportanlage bzw. Transportanlage selbst dient vorteilhaft dazu, das Faserhalbzeug von einer Bearbeitungsanlage bzw. -vorrichtung zu einer anderen Bearbeitungsanlage zu transportieren, wobei eine Bearbeitungsanlage beispielsweise eine Injektionsanlage bzw. Imprägnieranlage oder auch eine Konsolidierungsanlage, wie beispielsweise eine Pressanlage sein kann. Es ist des Weiteren denkbar, dass das Platzierungsmittel beispielsweise ein Greifelement, ein Klemmelement, ein Stift bzw. Pin oder ein stabförmiges Element sein kann, welches zum Greifen bzw. Durchdringen eines Anordnungselementes des Positionierungskörpers dient. Das Anordnungselement des Positionierungskörpers ist vorteilhaft eine Bohrung und insbesondere eine Durchgangsbohrung oder auch ein Vorsprung, wie beispielsweise eine Nase oder ein Haken, wobei es auch denkbar ist, dass das Anordnungselement selbst eine Ausnehmung bzw. Aussparung mit oder ohne Hinterschneidung sein kann.

Vorteilhaft ist je nach Ausgestaltung des Platzierungsmittels der Verbindungsanlage auch das Anordnungselement des Positionierungskörpers ausgestaltet. Das bedeutet, dass bei Vorliegen eines Greifelementes bzw. Klemmelementes als Platzierungsmittel der Positionierungskörper vorteilhaft einen Vorsprung bzw. ein Hakenelement und Vergleichbares als Anordnungselement aufweist, welches das Greifelement bzw. das Klemmelement greifen kann. So ist es folglich denkbar, dass bei einer Ausgestaltung des Platzierungsmittels in Form eines Stiftes bzw. Pins der Positionierungskörper selbst als Anordnungselement eine Bohrung und insbesondere eine Durchgangsbohrung aufweist, durch welche das Platzierungsmittel, und insbesondere der Platzierungspin bzw. -stift, zumindest abschnittsweise hindurchgreifen kann.

Das Haltemittel der Verbindungsanlage zum Halten des Faserhalbzeuges ist vorteilhaft ein Trägerelement in Form eines Trägertisches, auf welchem das Faserhalbzeug zumindest während der Verbindung des Faserhalbzeuges mit dem Positionierungskörper angeordnet ist. Ausgehend von diesem Haltemittel ist es denkbar, dass sich das Platzierungsmittel vorteilhaft in vertikaler Richtung und dementsprechend in einem Winkel von vorzugsweise ca. 90° senkrecht zur Auflageoberfläche des Haltemittels, auf welcher das Faserhalbzeug angeordnet wird, weg erstreckt. Bei einer entsprechenden Ausgestaltung des Platzierungsmittels in Form eines Platzierungspins oder Platzierungsstiftes weist vorteilhaft der Positionierungskörper Aussparungen in Form von Bohrungen, insbesondere Durchgangsbohrungen, auf, mittels welchen der Positionierungskörper auf den Platzierungspin bzw. Platzierungsstift aufgesteckt werden kann, so dass sich der Platzierungspin bzw. Platzierungsstift vorteilhaft zumindest abschnittsweise durch diese Bohrungen bzw. Aussparungen hindurch erstreckt. Es ist des Weiteren denkbar, dass, wie zuvor genannt, das Platzierungsmittel auch ein Greifelement oder auch ein Klemmelement ist, welches folglich einen Vorsprung bzw. ein Hakenelement oder auch ein Nasenelement des Positionierungskörpers greift bzw. festklemmt.

Demzufolge ist es im Rahmen der Erfindung denkbar, dass das Platzierungsmittel eine geometrische Gestalt aufweist, welche mit einer geometrischen Gestalt eines Anordnungselementes des Positionierungskörpers zumindest abschnittsweise wechselwirkt. Weist folglich das Platzierungsmittel der Verbindungsanlage eine kreisförmige und insbesondere eine kreiszylinderförmige Gestalt auf, so ist es vorteilhaft möglich, dass das Anordnungselement des Positionierungskörpers in Form einer Bohrung und insbesondere einer Durchgangsbohrung und folglich einer kreisförmigen Durchgangsbohrung ausgestaltet ist. Demzufolge ist es auch möglich, sofern das Platzierungsmittel eine eckige, beispielsweise dreieckige oder viereckige Umfangsform aufweist, dass folglich auch das Anordnungselement als eine eckige Aussparung ausgestaltet ist. Vorteilhaft wird hierdurch ein passgenaues Anordnen des Positionierungskörpers an bzw. auf dem Platzierungsmittel ermöglicht.

Im Rahmen der Erfindung ist es des Weiteren denkbar, dass die Verbindungsanlage ein Ausrichtungsmittel zum Ausrichten des Faserhalbzeuges relativ zu dem Platzierungsmittel aufweist. Das Ausrichtungsmittel zum Ausrichten des Faserhalbzeuges dient vorteilhaft dazu das Faserhalbzeug anzuordnen und relativ zu dem wenigstens einen Platzierungsmittel und dementsprechend folglich zu dem an dem Platzierungsmittel angeordneten Positionierungskörper auszurichten. Es ist des Weiteren denkbar, dass die Verbindungsanlage nicht nur ein Positionierungsmittel, sondern eine Mehrzahl und insbesondere zwei oder mehr Positionierungsmittel aufweist, welche beabstandet zueinander in einer definierten und vorgegebenen Positionierung zueinander angeordnet sind. Dementsprechend ist es möglich, dass an dem Faserhalbzeug auch eine Mehrzahl an Positionierungskörpern angeordnet wird. Vorteilhaft ist das Ausrichtungsmittel bei Vorliegen einer Mehrzahl an Platzierungsmitteln zumindest abschnittsweise in einem Bereich zwischen den Platzierungsmitteln angeordnet, da insbesondere das Faserhalbzeug vorteilhaft mehr als einen Positionierungskörper aufweisen kann, wobei die wenigstens zwei Positionierungskörper in Umfangsrichtung des Faserhalbzeuges betrachtet an zueinander gegenüberliegenden Seiten im Wesentlichen sich in einer Ebene erstreckend angeordnet sind. Das Ausrichtungsmittel der Verbindungsanlage kann beispielsweise eine Nut, eine Vertiefung oder eine Ausnehmung in einem Bereich des Haltemittels sein, auf welchem das Faserhalbzeug angeordnet wird und welches folglich ein Verrutschen des Faserhalbzeuges verhindert. Folglich ist es denkbar, dass zumindest ein Abschnitt des Faserhalbzeuges in dieser Vertiefung bzw. Ausnehmung angeordnet werden kann, wobei diese Vertiefung bzw. Ausnehmung und folglich das Ausrichtungsmittel vorteilhaft eine zu dem Faserhalbzeug bzw. einem Abschnitt des Faserhalbzeuges vergleichbare geometrische Gestalt aufweisen kann. Es ist des Weiteren denkbar, dass das Ausrichtungsmittel auch in Form eines Pins, Stiftes, einer Führungswandung, eines Greifers, eines Klemmelementes oder etwas Vergleichbarem ausgestaltet ist. Ein derart geometrisch gestaltetes Ausrichtungsmittel erstreckt sich vorteilhaft zumindest abschnittsweise von dem Haltemittel ausgehend beispielsweise in Richtung einer angeordneten Fügevorrichtung und dient vorteilhaft dazu, das Faserhalbzeug zu positionieren und ggf. während des Fügeverfahrens bzw. Verbindungsverfahrens zu arretieren.

Es ist des Weiteren denkbar, dass die Verbindungsanlage eine Nähanlage und insbesondere eine zweidimensionale Portalnähanlage ist. Eine derartige Portalnähanlage arbeitet mit wenigstens einem Nähkopf und vorteilhaft mit einer Mehrzahl an Nähköpfen, wobei als Verbindungsmittel insbesondere ein Verbindungsfaden, wie beispielsweise ein Garn, ein Glasfaserfaden, ein Polyesterfaden oder Aramidfaden Verwendung findet.

Demzufolge ist es im Rahmen der Erfindung denkbar, dass die Fügevorrichtung ein Fügeelement aufweist, wobei die Fügevorrichtung insbesondere ein Nähkopf und das Fügeelement insbesondere ein Nadelelement ist. Mittels des Nähkopfes wird vorteilhaft der Positionierungskörper an dem Faserhalbzeug und insbesondere einem Überlappungsbereich des Faserhalbzeuges angenäht, wobei als Naht beispielsweise ein Steppstich, Blindstich, (Einfaden-)Kettenstich oder Doppelstich oder Vergleichbares verwendet werden kann. Es ist des Weiteren denkbar, dass das Faserhalbzeug und insbesondere ein Überlappungsbereich des Faserhalbzeuges, an welchem der Positionierungskörper angeordnet wird und/oder der Positionierungskörper selbst bereits insbesondere Bohrungen und vorteilhaft Löcher aufweist, durch welche ein Fadenelement hindurchgezogen werden kann. Bei Vorliegen von entsprechend vorbearbeiteten Bereichen des Faserhalbzeuges sowie vorbearbeiteten Bereichen des wenigstens einen Positionierungskörpers findet folglich ein Durchfädeln des Fadenelementes durch die jeweiligen Löcher des Positionierungskörpers und/oder des Faserhalbzeuges unter Verwendung der Verbindungsanlage und des Nähkopfes bzw. der Fügevorrichtung statt. Vorteilhaft wird durch die Verwendung einer Nahanlage und insbesondere eines Fadenelementes ein einfaches Verbinden sowie auch Lösen des Positionierungskörpers mit bzw. von dem Faserhalbzeug erzielt.

Es ist des Weiteren ein Verfahren zum Präparieren eines zumindest in einer Bearbeitungsanlage zum Bearbeiten eines Faserhalbzeuges anordenbaren Faserhalbzeuges mittels einer Verbindungsanlage zum Verbinden des Faserhalbzeuges mit einem Positionierungskörper, aufweisend zumindest die folgenden Schritte beansprucht:
- Anordnen des Positionierungskörpers an einem Platzierungsmittel der Verbindungsanlage zur Positionierung des Positionierungskörpers an der Verbindungsanlage,
- Anordnen des Faserhalbzeuges auf einem Haltemittel der Verbindungsanlage, wobei ein Überlappungsbereich des Faserhalbzeuges wenigstens abschnittsweise von dem Positionierungskörper überlappt wird, und
- Verbinden des Faserhalbzeuges mit dem Positionierungskörper mittels einer Fügevorrichtung der Verbindungsanlage.

Es ist folglich denkbar, dass der wenigstens eine Positionierungskörper vor dem Anordnen des Faserhalbzeuges auf dem Haltemittel der Verbindungsanlage an dem wenigstens einem Platzierungsmittel der Verbindungsanlage angeordnet wird, wobei es auch möglich ist, dass das Faserhalbzeug zeitlich vor der Anordnung des Positionierungskörpers an dem Platzierungsmittel auf dem Haltemittel der Verbindungsanlage positioniert wird. Das Haltemittel selbst ist vorteilhaft ein Trägerelement in Form eines Tischelementes, auf welchem das Faserhalbzeug angeordnet wird, wobei es denkbar ist, dass sich das wenigstens eine Platzierungsmittel ausgehend von dem Haltemittel vorteilhaft in senkrechter Richtung weg erstreckt, um den Positionierungskörper, aufweisend vorteilhaft eine Aussparung in Form einer Bohrung und insbesondere einer Durchgangsbohrung, aufzunehmen. Es ist jedoch auch denkbar, dass das Platzierungsmittel selbst in Form eines Platzierungspins bzw. Platzierungsstiftes oder Platzierungsstabes, oder auch in Form eines Greifelementes oder Klemmelementes ausgestaltet ist, um den Positionierungskörper, insbesondere an entsprechenden Anordnungselementen zu greifen bzw. zu halten. Vorteilhaft wird mit der Anordnung des Positionierungskörpers an dem Platzierungsmittel eine fehlerhafte Anordnung des Positionierungskörpers innerhalb der Verbindungsanlage vermieden. Ein Verbinden des Faserhalbzeuges mit dem Positionierungskörper kann in lösbarer oder unlösbarer Art und Weise mittels Verwendung eines lösbaren oder unlösbaren Verbindungsmittels oder unter Verwendung keines Verbindungsmittels erfolgen. So ist es denkbar, dass als lösbare Verbindung unter Verwendung eines Verbindungsmittels beispielsweise eine Schraubverbindung oder auch Nietverbindung oder auch eine Nähverbindung unter Verwendung eines Fadenelementes verstanden wird. Ein unlösbares Verbindungsmittel ist vorteilhaft ein Klebemittel oder auch ein Schweißmittel. Es ist jedoch auch denkbar, dass ohne die Verwendung eines zusätzlichen Verbindungsmittels eine Verbindung zwischen dem Positionierungskörper und dem Faserhalbzeug hergestellt werden kann, wobei folglich als Verbindungsverfahren ein Clinchverfahren, Falzverfahren oder auch ein Schweißverfahren zum Einsatz gelangen können. Durch ein Anordnen des Positionierungskörpers an einem Platzierungsmittel der Verbindungsanlage soll vorteilhaft der Positionierungskörper relativ zu dem Faserhalbzeug oder beispielsweise bei Vorliegen von wenigstens zwei Positionierungskörpern relativ zu dem anderen Positionierungskörper an dem Faserhalbzeug angeordnet werden, um folglich ein definiertes Anordnen des mit dem Positionierungskörper präparierten Faserhalbzeuges in einer Bearbeitungsanlage und/oder einer Transportanlage zu gewährleisten, wobei vorteilhaft hierdurch ein Verrutschen des präparierten Faserhalbzeuges in der Bearbeitungsanlage zumindest während des Bearbeitungsprozesses sowie auch in der Transportanlage zumindest während des Transportes des Faserhalbzeuges von beispielsweise einer Bearbeitungsanlage zu einer weiteren Bearbeitungsanlage vermieden wird.

Vorteilhaft ist es folglich denkbar, dass ein Anordnungselement des Positionierungskörpers in Wechselwirkung mit dem Platzierungsmittel gebracht wird. Dies bedeutet, dass das Anordnungsmittel des Positionierungskörpers, welches beispielsweise eine Bohrung und insbesondere eine Durchgangsbohrung oder auch ein Vorsprung oder Ähnliches darstellen kann, von dem Platzierungsmittel zumindest abschnittsweise durchdrungen oder gehalten bzw. gegriffen wird. Vorteilhaft wird hierdurch ein Verrutschen des Positionierungskörpers innerhalb der Verbindungsanlage zum Verbinden des Positionierungskörpers mit dem Faserhalbzeug verhindert.

Es ist des Weiteren denkbar, dass das Faserhalbzeug mittels eines Ausrichtungsmittels der Verbindungsanlage auf dem Haltemittel relativ zu dem Platzierungsmittel positioniert wird. Die Positionierung des Faserhalbzeuges relativ zu dem Platzierungsmittel kann entweder vor dem Anordnen des Positionierungskörpers auf dem bzw. an dem Platzierungsmittel oder nach der Positionierung des Positionierungskörpers auf dem bzw.an dem Platzierungsmittel erfolgen. Vorteilhaft wird mit der Verwendung des Ausrichtungsmittels eine exakte Positionierung des Faserhalbzeuges auf bzw. an dem Haltemittel in der Verbindungsanlage ermöglicht, so dass ein fehlerhaftes, wie beispielsweise ein seitenverkehrtes Anordnen des Faserhalbzeuges in der Verbindungsanlage vermieden wird.

Es ist des Weiteren denkbar, dass zur Durchführung des Verfahrens zumindest eine gemäß einem der vorangegangenen Ansprüche 1 bis 6 ausgestaltete Verbindungsanlage und folglich eine Verbindungsanlage der vorgenannten Art verwendet wird.

Bei dem beschriebenen Verfahren ergeben sich sämtliche Vorteile, die bereits zu einer Verbindungsanlage gemäß dem ersten Aspekt der Erfindung beschrieben worden sind.

Eine Ausführungsform einer Transportanlage sowie einer Bearbeitungsanlage sowie Ausführungsformen eines mit wenigstens einem Positionierungskörper präparierten Faserhalbzeuges sowie eine Ausführungsform einer Verbindungsanlage werden nachfolgend anhand von Zeichnungen näher erläutert. Es zeigen jeweils schematisch:
- Figur 1: in eine Seitenansicht eine Schnittdarstellung eines mittels einer Transportanlage gehaltenen Faserhalbzeuges,
- Figur 2: in eine Seitenansicht eine Schnittdarstellung eines in einer Bearbeitungsanlage angeordneten Faserhalbzeuges,
- Figur 3a: in einer Draufsicht eine erste Ausführungsform eines mit Positionierungskörpern präparierten Faserhalbzeuges,
- Figur 3b: in einer Draufsicht eine weitere Ausführungsform eines mit Positionierungskörpern präparierten Faserhalbzeuges,
- Figur 3c: in einer Draufsicht eine weitere Ausführungsform eines mit Positionierungskörpern präparierten Faserhalbzeuges,
- Figur 3d: in einer Draufsicht eine weitere Ausführungsform eines mit Positionierungskörpern präparierten Faserhalbzeuges, und
- Figur 4: in einer Seitenansicht eine Schnittdarstellung einer Ausführungsform einer Verbindungsanlage.

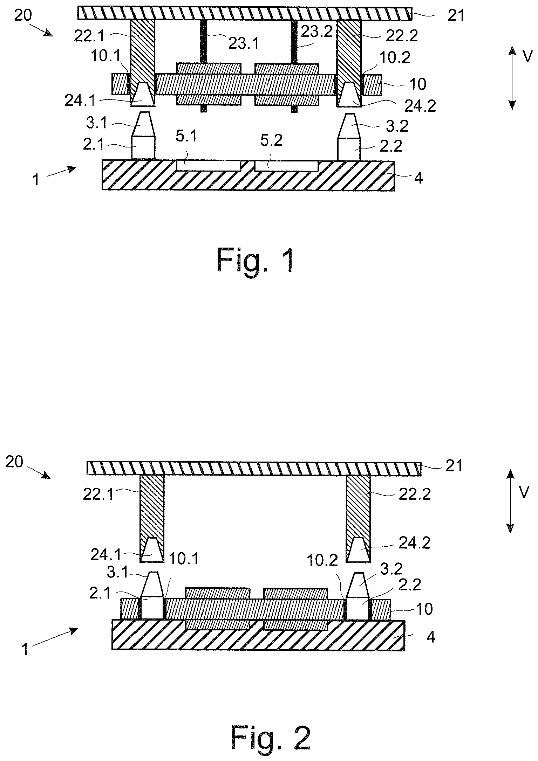

Elemente mit gleicher Funktion und Wirkungsweise sind in den Figuren 1 bis 4 jeweils mit denselben Bezugszeichen versehen.

In Fig. 1 ist unter anderem in einer Seitenansicht eine Schnittdarstellung einer Bearbeitungsanlage 1 sowie einer Transportanlage 20 dargestellt. Die Bearbeitungsanlage 1 kann beispielsweise eine Imprägnieranlage bzw. Injektionsanlage oder auch eine Konsolidierungsanlage sein. Die Bearbeitungsanlage 1 weist ein Auflageelement 4 auf, von welchem sich ausgehend Positioniermittel 2.1 bzw. 2.2 in vertikaler Richtung V in Richtung der Transportanlage 20 erstrecken. Es ist denkbar, dass die Positioniermittel 2.1 und 2.2 Eingriffsbereiche 3.1 bzw. 3.2 aufweisen, um ein Anordnen der Aufnahmemittel 22.1 und 22.2 der Transportanlage 20 zu erleichtern. Des Weiteren ist es denkbar, dass die Bearbeitungsanlage 1 Vertiefungen 5.1 bzw. 5.2, eingebracht in dem Auflageelement 4, aufweist, um Abschnitte bzw. Bereiche des Faserhalbzeuges 10 aufzunehmen. Das Faserhalbzeug 10 ist an der Transportanlage 20 angeordnet und weist Bohrungen 10.1 bzw. 10.2 auf, durch welche sich hindurch zumindest Abschnitte der Aufnahmemittel 22.1 bzw. 22.2 der Transportanlage 20 erstrecken. Die Transportanlage 20 weist zudem ein Tragelement 21 auf, welches die Aufnahmemittel 22.1 und 22.2 arretiert, welche sich ausgehend von dem Tragelement 21 in vertikaler Richtung V senkrecht in Richtung der Bearbeitungsanlage 1 erstrecken. Es ist des Weiteren möglich, dass die Transportanlage 20 Arretierungsmittel 23.1 und 23.2 aufweist, welche das Faserhalbzeug zumindest abschnittsweise untergreifen und zum Halten bzw. Arretieren des Faserhalbzeuges 10 zumindest während des Transportes des Faserhalbzeuges 10 von beispielsweise einer ersten Bearbeitungsanlage zu einer weiteren Bearbeitungsanlage dienen. Die Aufnahmemittel 22.1 und 22.2 können zudem Aussparungen 24.1 und 24.2 aufweisen, welche geometrisch derart ausgestaltet sind, dass in diese die Eingriffsbereiche 3.1 bzw. 3.2 der Positioniermittel 2.1 bzw. 2.2 zumindest abschnittsweise eingebracht werden können. Dies ist insbesondere dann vorteilhaft, wenn eine Übergabe des Faserhalbzeuges 10 von der Transportanlage 20 zu der Bearbeitungsanlage 1 ermöglicht werden soll. Eine entsprechende Übergabe des Faserhalbzeuges 10 ist insbesondere in der nachfolgenden Fig. 2 dargestellt.

Wie in der Fig. 2 gezeigt, ist das Faserhalbzeug 10 bereits in der Bearbeitungsanlage 1 angeordnet, so dass sich die Positioniermittel 2.1 bzw. 2.2 zumindest abschnittsweise durch die Bohrungen 10.1 bzw. 10.2 des Faserhalbzeuges 10 hindurch erstrecken, durch welche sich zuvor die Aufnahmemittel 22.1 bzw. 22.2 der Transportanlage 20 hindurch erstreckt hatten. Um folglich vorteilhaft einen Transport des Faserhalbzeuges 10 mittels der in den Fig. 1 und 2 dargestellten Transportanlage 20 sowie eine Anordnung des Faserhalbzeuges 10 in einer entsprechend ausgestalteten Bearbeitungsanlage 1 wie in den Fig. 1 und 2 ausgestaltet, zu ermöglichen, ist es erforderlich, dass das Faserhalbzeug 10 entsprechende Anordnungselemente, wie beispielsweise Bohrungen 10.1 und 10.2 aufweist, welche mit den Positioniermitteln 2.1 bzw. 2.2 und/oder Aufnahmemitteln 22.1 und 22.2 wechselwirken können.

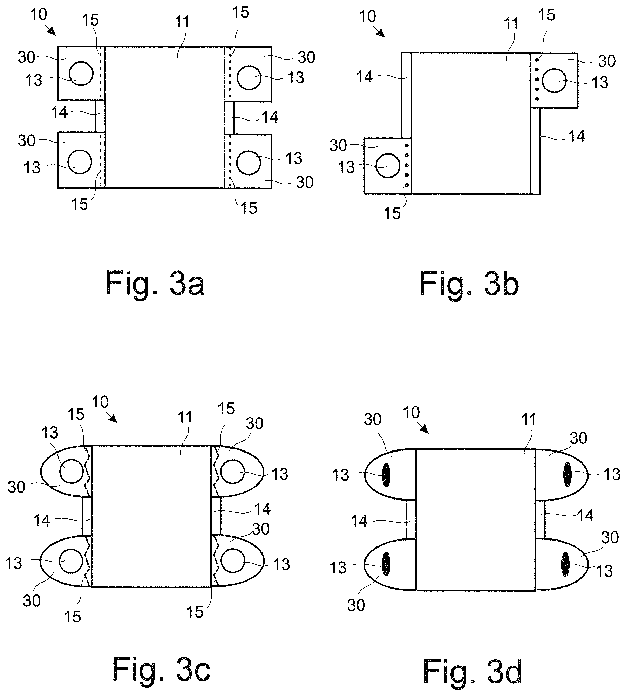

Entsprechende Ausführungsformen eines mit Positionierungskörpern präparierten Faserhalbzeuges 10 sind in den Fig. 3a bis 3d gezeigt. So ist unter anderem in der Fig. 3a in einer Draufsicht eine Ausführungsform eines mit Positionierungskörpern 30 präparierten Faserhalbzeuges 10 gezeigt, welches einen Bauteilbereich 11 sowie einen Überlappungsbereich 14 aufweist, wobei sich der Überlappungsbereich 14 vorteilhaft ausgehend von dem Bauteilbereich 11 nach außen vom Bauteilbereich 11 weg erstreckt. Der Überlappungsbereich 14 dient vorteilhaft dazu, den wenigstens einen Positionierungskörper 30 und vorteilhaft, wie in der Fig. 3a gezeigt, vier Positionierungskörper 30 mit dem Faserhalbzeug 10 zu verbinden. Die Positionierungskörper 30 weisen vorteilhaft Anordnungselemente 13 auf, welche, wie in der Fig. 3a gezeigt, in Form einer Bohrung ausgestaltet sein können. Mittels eines entsprechenden Verbindungsmittels 15, wie beispielsweise eines Fadenelementes, werden die Positionierungskörper 30 an dem Überlappungsbereich 14 des Faserhalbzeuges 10 angeordnet bzw. mit dem Faserhalbzeug 10 verbunden.

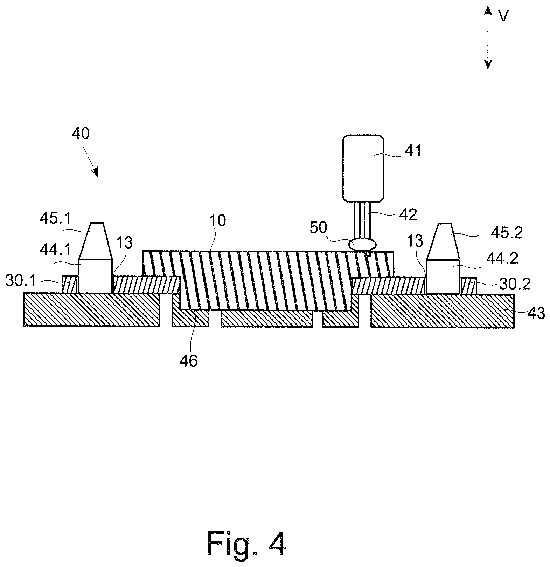

Wie in den nachfolgenden Fig. 3b bis 3d gezeigt, ist es auch denkbar, dass weniger als vier Positionierungskörper 30, sondern insbesondere lediglich einer oder auch zwei Positionierungskörper 30, wie insbesondere in der Fig. 3b gezeigt, an dem Faserhalbzeug 10 angeordnet und mit diesem lösbar oder unlösbar verbunden werden können. Es ist zudem auch denkbar, dass die geometrische Gestaltung der Positionierungskörper unterschiedlich ist. So weisen beispielsweise die Positionierungskörper 30, wie beispielsweise in den Ausführungsformen der Fig. 3c und 3d gezeigt, eine ovale bzw. runde Gestalt auf, während die Positionierungskörper der in den Fig. 3a bzw. 3b gezeigten Ausführungsformen eine eckige Gestaltung aufweisen. Es ist des Weiteren denkbar, dass die Positionierungskörper 30 neben den als Bohrungen bzw. Durchgangsbohrungen ausgestalteten Anordnungselementen 13 auch in Form von Vorsprüngen ausgestaltete Anordnungselemente 13, wie insbesondere bei der in der Fig. 3d gezeigten Ausführungsform dargestellt, aufweisen können, so dass entsprechende Greifelemente bzw. Klemmelemente der Verbindungsanlage 40 (vgl. Fig. 4) und/oder der Bearbeitungsanlage 1 (vgl. Fig. 1 oder 2) und/oder der Transportanlage 20 (vgl. Fig. 1 oder 2) an diese Anordnungselemente 13 angreifen können. Es ist des Weiteren denkbar, dass anstelle eines Fadenelementes als Verbindungsmittel 15, wie in der Fig. 3a gezeigt, auch Nietelemente bzw. Schraubenelemente als Verbindungsmittel, wie beispielsweise in der Fig. 3b gezeigt, Verwendung finden können. Wie insbesondere in der Fig. 3d verdeutlicht, ist es auch denkbar, dass die Positionierungskörper 30 unter Einsatz eines hier nicht sichtbaren Klebemittels mit dem Faserhalbzeug 10 und insbesondere den Überlappungsbereichen 14 des Faserhalbzeuges 10 verbunden werden.

In der Fig. 4 ist in einer Seitenansicht eine Schnittdarstellung einer Ausführungsform einer erfindungsgemäßen Verbindungsanlage 40 gezeigt. Die Verbindungsanlage 40 weist eine Fügevorrichtung 41 mit einem daran angeordneten Fügeelement 42 auf, wobei die Fügevorrichtung 41 selbst ein Nähkopf und das Fügeelement 42 beispielsweise ein Nadelelement sein kann. Folglich ist es denkbar, dass die Verbindungsanlage 40 eine Nähanlage und insbesondere eine zweidimensionale Portalnähanlage ist. Des Weiteren weist die Verbindungsanlage 40 ein Haltemittel 43 auf, von welchem ausgehend sich Platzierungsmittel 44.1 und 44.2 vorteilhaft in vertikaler Richtung V senkrecht nach oben und folglich in Richtung der Fügevorrichtung erstrecken. Die Platzierungsmittel 44.1 bzw. 44.2 weisen vorteilhaft Einführbereiche 45.1 bzw. 45.2 auf, um ein Anordnen von beispielsweise Aufnahmemittel 22.1 bzw. 22.2 einer Transportanlage 20, wie beispielsweise in den Fig. 1 und 2 gezeigt, zu erleichtern. Des Weiteren ist ein Verbindungsmittel 50 in der Fig. 4 gezeigt, welches bei Vorliegen einer Nähanlage als Verbindungsanlage 40 ein Fadenelement sein kann, um ein Faserhalbzeug 10 mit wenigstens einem Positionierungskörper 30 und, wie in der Fig. 4 gezeigt, wenigstens zwei Positionierungskörpern 30.1 und 30.2 zu verbinden. Das Haltemittel 43 weist zudem ein Ausrichtungsmittel 46, welches, wie in der Ausführungsform der Fig. 4 gezeigt, in Form einer Ausnehmung bzw. Aussparung ausgestaltet sein kann, auf. In dieses Ausrichtungsmittel 46 ist insbesondere ein Teil bzw. ein Abschnitt des Faserhalbzeuges 10 einbringbar, um das Faserhalbzeug 10 insbesondere gegenüber den Platzierungsmitteln 44.1 und 44.2 auszurichten bzw. anzuordnen, so dass folglich das Faserhalbzeug 10 auch gegenüber den mit dem Platzierungsmittel 44.1 und 44.2 angeordneten Positionierungskörpern 30 ausgerichtet ist.

### Bezugszeichenliste

- 1: Bearbeitungsanlage
- 2.1, 2.2: Positioniermittel
- 3.1, 3.2: Eingriffsbereich des Positioniermittels
- 4: Auflageelement
- 5.1, 5.2: Vertiefung des Auflageelementes
- 10: Faserhalbzeug
- 10.1, 10.2: Bohrung des Faserhalbzeuges
- 11: Bauteilbereich
- 13: Anordnungselement
- 14: Überlappungsbereich
- 15: Verbindungsmittel
- 20: Transportanlage
- 21: Tragelement
- 22.1, 22.2: Aufnahmemittel
- 23.1, 23.2: Arretierungsmittel
- 24.1, 24.2: Aussparung des Aufnahmemittels
- 30, 30.1, 30.2: Positionierungskörper
- 40: Verbindungsanlage
- 41: Fügevorrichtung
- 42: Fügeelement
- 43: Haltemittel
- 44.1, 44.2: Platzierungsmittel
- 45.1, 45.2: Einführbereich des Platzierungsmittels
- 46: Ausrichtungsmittel
- 50: Verbindungsmittel
- V: Vertikale Richtung

## Patentansprüche

1. Verbindungsanlage (40) zum Verbinden eines Faserhalbzeuges (10) mit einem Positionierungskörper (30, 30.1, 30.2) zum Positionieren des Faserhalbzeuges (10) zumindest an wenigstens einem Positioniermittel (2.1, 2.2) einer Bearbeitungsanlage (1) zum Bearbeiten des Faserhalbzeuges (10), wobei die Verbindungsanlage (40) wenigstens eine Fügevorrichtung (41) zum Zusammenfügen des Faserhalbzeuges (10) mit dem Positionierungskörper (30, 30.1, 30.2) und zumindest ein Platzierungsmittel (44.1, 44.2) zum Platzieren des Positionierungskörpers (30, 30.1, 30.2) an der Verbindungsanlage (40) aufweist,
**dadurch gekennzeichnet, dass**
das Platzierungsmittel (44.1, 44.2) ein Platzierungspin oder Platzierungsstift ist, welcher sich ausgehend von einem Haltemittel (43) der Verbindungsanlage (40) wenigstens zum Halten des Faserhalbzeuges (10) weg erstreckt..

2. Verbindungsanlage (40) gemäß Anspruch 1,
**dadurch gekennzeichnet, dass**
das Platzierungsmittel (44.1, 44.2) eine geometrische Gestalt aufweist, welche mit einer geometrischen Gestalt eines Anordnungselementes (13) des Positionierungskörpers (30, 30.1, 30.2) zumindest abschnittsweise wechselwirkt.

3. Verbindungsanlage (40) gemäß wenigstens einem der vorangegangenen Ansprüche,
**dadurch gekennzeichnet, dass**
die Verbindungsanlage (40) ein Ausrichtungsmittel (46) zum Ausrichten des Faserhalbzeuges (10) relativ zu dem Platzierungsmittel (44.1, 44.2) aufweist.

4. Verbindungsanlage (40) gemäß wenigstens einem der vorangegangenen Ansprüche,
**dadurch gekennzeichnet, dass**
die Verbindungsanlage (40) eine Nähanlage und insbesondere eine zweidimensionale Portalnähanlage ist.

5. Verbindungsanlage (40) gemäß wenigstens einem der vorangegangenen Ansprüche,
**dadurch gekennzeichnet, dass**
die Fügevorrichtung (41) ein Fügeelement (42) aufweist, wobei die Fügevorrichtung insbesondere ein Nähkopf und das Fügelement insbesondere ein Nadelelement ist.

6. Verfahren zum Präparieren eines zumindest in einer Bearbeitungsanlage (1) zum Bearbeiten eines Faserhalbzeuges (10) anordenbaren Faserhalbzeuges (10) mittels einer Verbindungsanlage (40) zum Verbinden des Faserhalbzeuges (10) mit einem Positionierungskörper (30, 30.1, 30.2), aufweisend zumindest die Schritte:
- Anordnen des Positionierungskörpers (30, 30.1, 30.2) an einem Platzierungsmittel (44.1, 44.2) in Form eines Platzierungspins oder eines Platzierungsstiftes der Verbindungsanlage (40) zur Positionierung des Positionierungskörpers (30, 30.1, 30.2) an der Verbindungsanlage (40),
- Anordnen des Faserhalbzeugs (10) auf einem Haltemittel (43) der Verbindungsanlage (40), wobei ein Überlappungsbereich (14) des Faserhalbzeugs (10) wenigstens abschnittsweise von dem Positionierungskörper (30, 30.1, 30.2) überlappt wird, und
- Verbinden des Faserhalbzeuges (10) mit dem Positionierungskörper (30, 30.1, 30.2) mittels einer Fügevorrichtung (41) der Verbindungsanlage (40).

7. Verfahren gemäß Anspruch 6,
**dadurch gekennzeichnet, dass**
ein Anordnungselement (13) des Positionierungskörpers (30, 30.1, 30.2) in Wechselwirkung mit dem Platzierungsmittel (44.1, 44.2) gebracht wird.

8. Verfahren gemäß wenigstens einem der vorangegangenen Ansprüche 6 oder 7,
**dadurch gekennzeichnet, dass**
das Faserhalbzeug (10) mittels eines Ausrichtungsmittels (46) der Verbindungsanlage (40) auf dem Haltemittel (43) relativ zu dem Platzierungsmittel (44.1, 44.2) positioniert wird.

9. Verfahren gemäß wenigstens einem der vorangegangenen Ansprüche 6 bis 8,
**dadurch gekennzeichnet, dass**
zur Durchführung des Verfahrens zumindest eine gemäß einem der vorangegangenen Ansprüche 1 bis 5 ausgestaltete Verbindungsanlage (40) verwendet wird.

## Claims

1. Connection system (40) for connecting a fibrous semifinished product (10) to a positioning member (30, 30.1, 30.2) for positioning the fibrous semifinished product (10) at least on at least one positioning means (2.1, 2.2) of a processing system (1) for processing the fibrous semifinished product (10), wherein the connection system (40) has at least one joining device (41) for joining the fibrous semifinished product (10) to the positioning member (30, 30.1, 30.2) and at least one placing means (44.1, 44.2) for placing the positioning member (30, 30.1, 30.2) on the connection system (40),
**characterized in that**
the placing means (44.1, 44.2) is a placing pin or placing plug which, in order to at least retain the fibrous semifinished product (10), extends from a retaining means (43) of the connection system (40).

2. Connection system (40) according to Claim 1,
**characterized in that**
the placing means (44.1, 44.2) has a geometrical shape which at least in portions interacts with a geometrical shape of a disposing element (13) of the positioning member (30, 30.1, 30.2).

3. Connection system (40) according to at least one of the preceding claims,
**characterized in that**
the connection system (40) has an alignment means (46) for aligning the fibrous semifinished product (10) relative to the placing means (44.1, 44.2).

4. Connection system (40) according to at least one of the preceding claims,
**characterized in that**
the connection system (40) is a sewing system, in particular a two-dimensional portal sewing system.

5. Connection system (40) according to at least one of the preceding claims,
**characterized in that**
the joining device (41) has a joining element (42), wherein the joining device is in particular a sewing head, and the joining element is in particular a needle element.

6. Method for preparing a fibrous semifinished product (10) which by means of a connection system (40) for connecting the fibrous semifinished product (10) to a positioning member (30, 30.1, 30.2) is disposable in at least a processing system (1) for processing a fibrous semifinished product (10), the method comprising at least the following steps:
- disposing the positioning member (30, 30.1, 30.2) on a placing means (44.1, 44.2) in the form of a placing pin or a placing plug of the connection system (40), in order to position the positioning member (30, 30.1, 30.2) on the connection system (40) ;
- disposing the fibrous semifinished product (10) on a retaining means (43) of the connection system (40), wherein an overlap region (14) of the fibrous semifinished product (10) at least in portions is overlapped by the positioning member (30, 30.1, 30.2); and
- connecting the fibrous semifinished product (10) to the positioning member (30, 30.1, 30.2) by means of a joining device (41) of the connection system (40).

7. Method according to Claim 6,
**characterized in that**
a disposing element (13) of the positioning member (30, 30.1, 30.2) is brought to interact with the placing means (44.1, 44.2).

8. Method according to at least one of preceding Claims 6 or 7,
**characterized in that**
the fibrous semifinished product (10) by means of an alignment means (46) of the connection system (40) is positioned on the retaining means (43) relative to the placing means (44.1, 44.2).

9. Method according to at least one of preceding Claims 6 to 8,
**characterized in that**
in order for the method to be carried out at least one connection system (40) configured according to one of preceding Claims 1 to 5 is used.

## Revendications

1. Système de liaison (40) pour relier un produit semi-fini en fibres (10) à un corps de positionnement (30, 30.1, 30.2) servant à positionner le produit semi-fini en fibres (10) au moins sur au moins un moyen de positionnement (2.1, 2.2) d'un système de traitement (1) servant à traiter le produit semi-fini en fibres (10), le système de liaison (40) présentant au moins un dispositif d'assemblage (41) servant à assembler le produit semi-fini en fibres (10) au corps de positionnement (30, 30.1, 30.2) et au moins un moyen de placement (44.1, 44.2) servant à placer le corps de positionnement (30, 30.1, 30.2) sur le système de liaison (40),
**caractérisé en ce que**
le moyen de placement (44.1, 44.2) est une goupille de placement ou une broche de placement, laquelle s'étend à l'écart d'un moyen de retenue (43) du système de liaison (40) servant au moins à retenir le produit semi-fini en fibres (10).

2. Système de liaison (40) selon la revendication 1,
**caractérisé en ce que**
le moyen de placement (44.1, 44.2) présente une forme géométrique, laquelle interagit au moins dans certaines zones avec une forme géométrique d'un élément d'agencement (13) du corps de positionnement (30, 30.1, 30.2) .

3. Système de liaison (40) selon au moins l'une des revendications précédentes,
**caractérisé en ce que**
le système de liaison (40) présente un moyen d'orientation (46) servant à orienter le produit semi-fini en fibres (10) par rapport au moyen de placement (44.1, 44.2).

4. Système de liaison (40) selon au moins l'une des revendications précédentes,
**caractérisé en ce que**
le système de liaison (40) est un système de couture et en particulier un système de couture à portique bidimensionnel.

5. Système de liaison (40) selon au moins l'une des revendications précédentes,
**caractérisé en ce que**
le dispositif d'assemblage (41) présente un élément d'assemblage (42), le dispositif d'assemblage étant en particulier une tête de couture et l'élément d'assemblage étant en particulier un élément à aiguille.

6. Procédé de préparation d'un produit semi-fini en fibres (10) pouvant être agencé au moins dans un système de traitement (1) servant à traiter un produit semi-fini en fibres (10), au moyen d'un système de liaison (40) pour relier le produit semi-fini en fibres (10) à un corps de positionnement (30, 30.1, 30.2), présentant au moins les étapes suivantes :
- agencement du corps de positionnement (30, 30.1, 30.2) sur un moyen de placement (44.1, 44.2) se présentant sous la forme d'une goupille de placement ou d'une broche de placement du système de liaison (40) servant à positionner le corps de positionnement (30, 30.1, 30.2) sur le système de liaison (40),
- agencement du produit semi-fini en fibres (10) sur un moyen de retenue (43) du système de liaison (40), une région de chevauchement (14) du produit semi-fini en fibres (10) étant chevauchée par le corps de positionnement (30, 30.1, 30.2) au moins dans certaines zones, et
- liaison du produit semi-fini en fibres (10) au corps de positionnement (30, 30.1, 30.2) au moyen d'un dispositif d'assemblage (41) du système de liaison (40).

7. Procédé selon la revendication 6,
**caractérisé en ce**
**qu'**un élément d'agencement (13) du corps de positionnement (30, 30.1, 30.2) est amené en interaction avec le moyen de placement (44.1, 44.2).

8. Procédé selon au moins l'une des revendications précédentes 6 ou 7,
**caractérisé en ce que**
le produit semi-fini en fibres (10) est positionné sur le moyen de retenue (43) par rapport au moyen de placement (44.1, 44.2) au moyen d'un moyen d'orientation (46) du système de liaison (40).

9. Procédé selon au moins l'une des revendications précédentes 6 à 8,
**caractérisé en ce que**,
pour la mise en œuvre du procédé, au moins un système de liaison (40) configuré selon l'une des revendications précédentes 1 à 5 est utilisé.
